# EUROPEAN PATENT APPLICATION

(11) **EP 2 874 056 A1**
(43) Date of publication of application: **20.05.2015**
(21) Application number: 14190902.8
(22) Date of filing: 29.10.2014
(51) Int. Cl.: G06F 3/0488, G06F 3/044

(54) **Method for performing touch communications control of an electronic device by using location detection with aid of touch panel, and associated apparatus**

(30) Priority: 15.11.2013 US 201361904499 P; 10.09.2014 US 201414481929
(71) Applicant: MediaTek Inc., Hsin-Chu (TW)
(72) Inventor: Liao, Wan-Chun, Songshan Dist., Taipei City (TW); Chang, Tzu-Wen, Songshan Dist., Taipei City (TW); Ting, Shang-Lun, Shilin Dist., Taipei City (TW)
(74) Representative: Hoefer & Partner

(57) **Abstract**

A method for performing touch communications control and an associated apparatus (501, 520) are provided, where the method includes the steps of: detecting whether another touch communications device (520) is close to or in contact with a first region (511) of a touch panel (510) of the touch communications device (501) with aid of at least one of the touch panel (510) of the touch communications device (501) and a touch panel (521) of the other touch communications device (520) to obtain a detection result; and running a first application associated with the first region (511) based on the detection result.

## Description

The present invention relates to methods and apparatus for performing touch communications control according to the pre-characterizing clauses of claims 1, 12, and 13.

According to the related art, Near Field Communication (NFC) can be regarded as a contactless identification and interaction technology, and can be used for performing short distance wireless communications between mobile devices, consumer electronic products, personal computers, and/or intelligent electronic devices through a method of near field magnetic coupling (e.g. using the frequency of 13. 56 MHz), and the users of NFC devices can intuitively exchange information and acquire contents and services with ease, wherein as the market for portable electronic devices such as mobile phones equipped with NFC functionalities has become mature, they can be used for supporting mobile payment or point of sale (POS). However, as the NFC devices are designed to transmit and receive signals through magnetic coupling, it is typical to implement an inductive card reader or some components having similar functionalities in the aforementioned portable electronic devices such as the mobile phones mentioned above, which may cause the sizes of the portable electronic devices to be increased, and further cause the layouts, the structure arrangement, and the materials of components in the portable electronic devices such as the mobile phones to be limited.

Some touch communications technologies regarding touch panel devices (e.g. electronic device equipped with touch panels), such as those described in the U.S. Patent Application Publication No. 2011/0304583, the U.S. Patent Application Publication No. US 2013/0147760, the China Patent Application Publication No. CN 102916729 A, are proposed recently, where the touch panels and the driving integrated circuit (IC) in the touch panel devices can be used for performing communications and data transmission. For example, a conventional touch panel device may comprise a touch sensor. In addition, at least one portion of the touch sensor can be at least one portion of the touch panel in the conventional touch panel device, where the touch panel can be a touch panel that does not have the display functionality (e.g. a touch pad), or a touch panel that has the display functionality (e.g. a touch screen). The touch sensor may comprise multiple driving electrodes and sensing electrodes installed on substrates, such as the driving electrodes and the sensing electrodes for forming capacitor structures. At least one of the driving electrodes and the sensing electrodes can be used as transmitting electrodes, and at least one of the driving electrodes and the sensing electrodes can be used as receiving electrodes. Thus, the signals can be transmitted or received by using the electrodes and the driving IC in the conventional touch panel device, to realize touch communications based on electric fields, having no need to implement any inductive card reader or some components having similar functionalities in the conventional touch panel device, where this architecture can significantly reduce the size and save the costs, in comparison with the NFC technology. As a result, how to improve touch communications technologies without introducing various kinds of side effects has become an important issue to be solved.

This in mind, the present invention aims at providing a method for performing touch communications control and an associated apparatus that improve touch communications technologies without introducing various kinds of side effects.

This is achieved by methods and related apparatus according to claims 1, 12, and 13. The dependent claims pertain to corresponding further developments and improvements.

In one aspect, the disclosure features a method for performing touch communications control, where the method is applied to a touch communications device. The method comprises the steps of: detecting whether another touch communications device is close to or in contact with a first region of a touch panel of the touch communications device with aid of at least one of the touch panel of the touch communications device and a touch panel of the other touch communications device to obtain a detection result; and running a first application associated with the first region based on the detection result.

In one aspect, the disclosure features an apparatus for performing touch communications control, where the apparatus comprises at least one portion (e.g. a portion or all) of a touch communications device. The apparatus comprises a touch panel, and further comprises a processing circuit that is coupled to the touch panel. The touch panel is arranged to allow a communications connection to be established through the touch panel, and the processing circuit is arranged to perform touch communications control. More particularly, the processing circuit is capable of detecting whether another touch communications device is close to or in contact with a first region of the touch panel with aid of at least one of the touch panel of the touch communications device and a touch panel of the other touch communications device to obtain a detection result, and running a first application associated with the first region based on the detection result.

In one aspect, the disclosure features an apparatus for performing touch communications control, where the apparatus comprises at least one portion (e.g. a portion or all) of a touch communications device. The apparatus comprises a touch panel, and further comprises a processing circuit that is coupled to the touch panel. The touch panel is arranged to allow a communications connection to be established through the touch panel, and the processing circuit is arranged to perform touch communications control. More particularly, based on whether the touch communications device is close to or in contact with a first region of a touch panel of another touch communications device, the touch communications device is capable of triggering the other touch communications device to run a first application associated with the first region.

It is an advantage of the present invention that the present invention method and the associated apparatus can enhance the overall performance of touch communications devices. In addition, the present invention method and the associated apparatus can improve the experience of the user. Additionally, the security of the touch communications system implemented according to the present invention can be enhanced.

In the following, the invention is further illustrated by way of example, taking reference to the accompanying drawings. Thereof
FIG. 1 is a diagram of touch communications between a first touch panel device and a second touch panel device according to the related art,
FIG. 2 is a logical block diagram of a touch communications system for realizing the touch communications between the first touch panel device and the second touch panel device shown in FIG. 1 according to the related art,
FIG. 3 illustrates a first touch panel of the first touch panel device shown in FIG. 1 and a second touch panel of the second touch panel device shown in FIG. 1 according to the related art, FIG. 4 is a flowchart of a touch communications method according to the related art,
FIG. 5 is a diagram of an apparatus for performing touch communications control of an electronic device according to an embodiment of the present invention, where some associated electronic devices are illustrated for better comprehension,
FIG. 6 illustrates a flowchart of method for performing touch communications control of an electronic device according to an embodiment of the present invention,
FIG. 7 illustrates an electronic device according to an embodiment of the present invention, wherein one of the two touch communications devices shown in FIG. 5 can be integrated into the electronic device, and the other one of the two touch communications devices shown in FIG. 5 may interact with the electronic device through the touch communications device that is integrated into the electronic device, and
FIG. 8 illustrates a control scheme involved with the method shown in FIG. 6 according to an embodiment of the present invention.

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

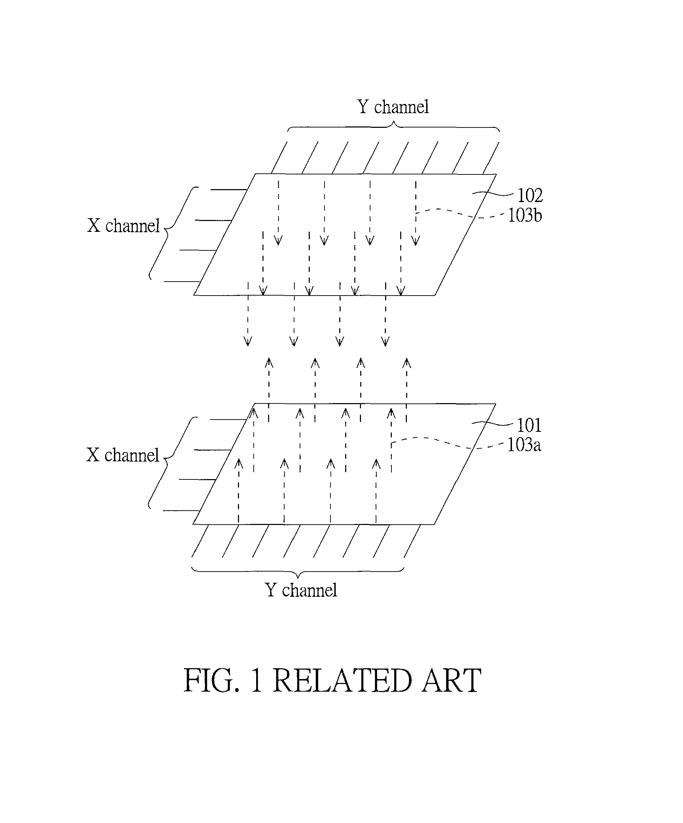

FIG. 1 illustrates a diagram of touch communications between a first touch panel device 101 and a second touch panel device 102 according to the related art. As shown in FIG. 1, there are near field electric fields 103a and 103b between the first touch panel device 101 and the second touch panel device 102. It should be noted that each of the first touch panel device 101 and the second touch panel device 102 can have the functionalities of transmitting and receiving signals. Based on this touch communications technology, when the first touch panel device 101 transmits signals toward the second touch panel device 102, the communications medium used by the first touch panel device 101 is the electric field portion whose electric field direction is pointing toward the second touch panel device 102 (e.g. the near electric field 103a shown in FIG. 1). In addition, when the second touch panel device 102 transmits signals toward the first touch panel device 101, the communications medium used by the second touch panel device 102 is the electric field portion whose electric field direction is pointing toward the first touch panel device 101 (e.g. the near electric field 103b shown in FIG. 1). Please note that the X channels and the Y channels shown in FIG. 1 may represent the transmitting electrodes and receiving electrodes installed on substrates, such as the transmitting electrodes and the receiving electrodes for forming capacitor structures.

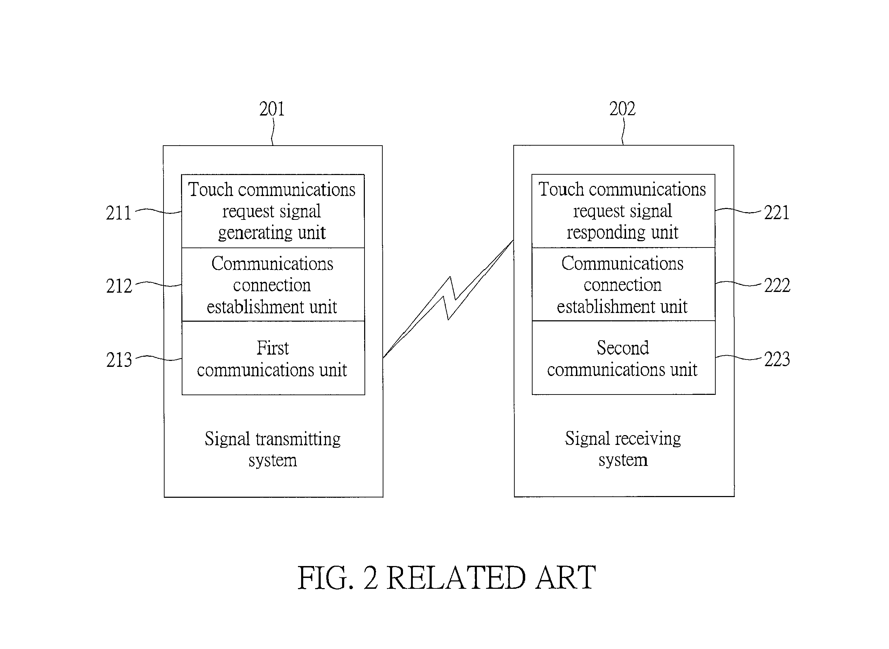

FIG. 2 is a logical block diagram of a touch communications system for realizing the touch communications between the first touch panel device 101 and the second touch panel device 102 shown in FIG. 1 according to the related art, where the touch communications system may comprise a signal transmitting system 201 and a signal receiving system 202. The first touch panel device 101 shown in FIG. 1 may comprise the signal transmitting system 201 shown in FIG. 2, and the second touch panel device 102 shown in FIG. 1 may comprise the signal receiving system 202 shown in FIG. 2. The signal transmitting system 201 may comprise a touch communications request signal generating unit 211, a communications connection establishment unit 212, and a first communications unit 213. More particularly, the touch communications request signal generating unit 211 may be arranged to generate a touch communications request signal, and to transmit the touch communications request signal to the second touch panel device 102 through the transmitting electrodes of the first touch panel device 101. After the first touch panel device 101 receives a response signal responded by the second touch panel device 102, such as the response signal received through the receiving electrodes of the first touch panel device 101, the communications connection establishment unit 212 may establish a communications connection with the second touch panel device 102 (i.e. the communications connection between the first touch panel device 101 and the second touch panel device 102). After the communications connection establishment unit 212 establishes the communications connection, the first communications unit 213 may transmit communications information and/or data to the second touch panel device 102 through the transmitting electrodes of the first touch panel device 101.

The signal receiving system 202 may comprise a touch communications request signal responding unit 221, a communications connection establishment unit 222, and a second communications unit 223. More particularly, after receiving the touch communications request signal transmitted by the first touch panel device 101, such as the touch communications request signal received through the receiving electrodes of the second touch panel device 102, the touch communications request signal responding unit 221 may respond to the touch communications request signal with a response signal such as that mentioned above, and more particularly, may send the response signal to the first touch panel device 101 through the transmitting electrodes of the second touch panel device 102. After the touch communications request signal responding unit 221 responds to the touch communications request signal of the first touch panel device 101 with the response signal, the communications connection establishment unit 222 may establish the communications connection with the first touch panel device 101 (i.e. the communications connection between the first touch panel device 101 and the second touch panel device 102). After the communications connection establishment unit 222 establishes the communications connection, the second communications unit 223 may receive the communications information and/or data from the first touch panel device 101 through the receiving electrodes of the second touch panel device 102.

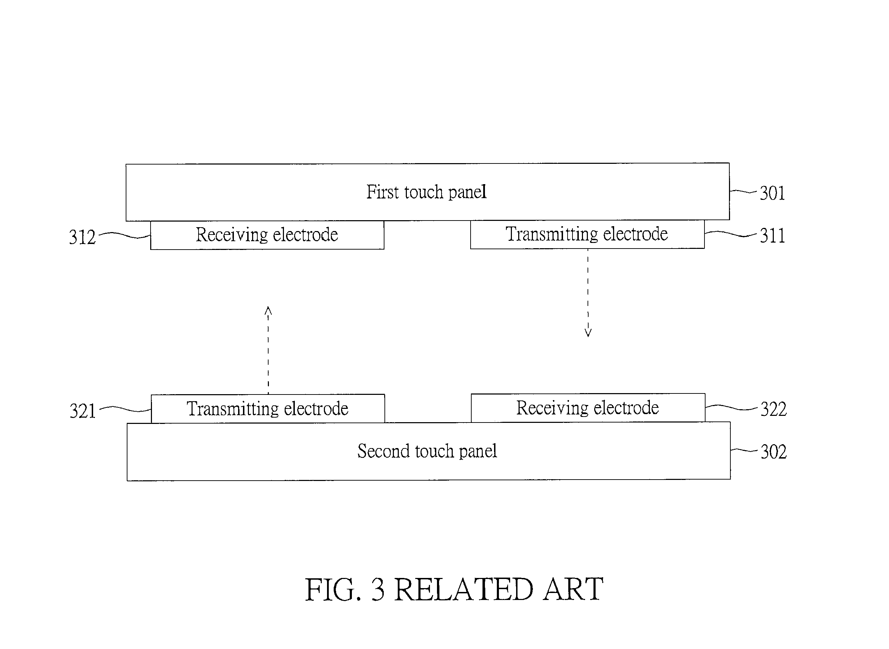

FIG. 3 illustrates a first touch panel 301 of the first touch panel device 101 shown in FIG. 1 and a second touch panel 302 of the second touch panel device 102 shown in FIG. 1 according to the related art. As shown in FIG. 3, each touch panel of the first touch panel 301 and the second touch panel 302 may comprise a touch sensor (not completely shown in FIG. 3). For example, the touch sensor of the first touch panel 301 may comprise a set of transmitting electrodes installed on at least one substrate of the first touch panel 301 (e.g. the transmitting electrode 311) for transmitting signals, and may comprise a set of receiving electrodes installed on at least one substrate of the first touch panel 301 (e.g. the receiving electrode 312) for receiving signals. In another example, the touch sensor of the second touch panel 302 may comprise a set of transmitting electrodes installed on at least one substrate of the second touch panel 302 (e.g. the transmitting electrode 321) for transmitting signals, and may comprise a set of receiving electrodes installed on at least one substrate of the second touch panel 302 (e.g. the receiving electrode 322) for receiving signals.

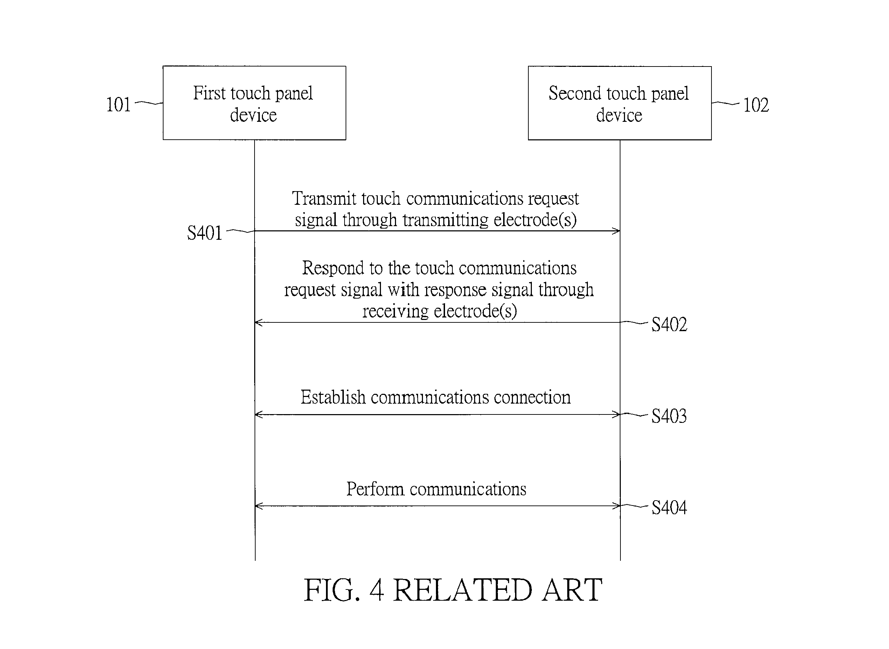

FIG. 4 is a flowchart of a touch communications method according to the related art. First, in Step S401, the touch communications request signal generating unit 211 of the first touch panel device 101 may generate a touch communications request signal such as that mentioned above, and transmit the touch communications request signal to the second touch panel device 102 through the transmitting electrode(s) of the first touch panel device 101. Afterward, in Step S402, the touch communications request signal responding unit 221 of the second touch panel device 102 may respond to the touch communications request signal with a response signal such as that mentioned above through the transmitting electrode(s) of the second touch panel device 102, and more particularly, send the response signal to the first touch panel device 101 through the transmitting electrode(s) of the second touch panel device 102. After the first touch panel device 101 receives the response signal responded by the second touch panel device 102, such as the response signal received through the receiving electrodes of the first touch panel device 101, in Step S403, the communications connection establishment unit 212 of the first touch panel device 101 and the communications connection establishment unit 222 of the second touch panel device 102 may establish a communications connection such as that mentioned above (i.e. the communications connection between the first touch panel device 101 and the second touch panel device 102). As a result, in Step S404, the first touch panel device 101 (more particularly, the first communications unit 213 therein) and the second touch panel device 102 (more particularly, the second communications unit 223 therein) may perform communications as shown in FIG. 4. For example, the first communications unit 213 of the first touch panel device 101 may transmit the communications information and/or data to the second touch panel device 102 through the transmitting electrodes of the first touch panel device 101, and the second communications unit 223 of the second touch panel device 102 may receive the communications information and/or data from the first touch panel device 101 through the receiving electrodes of the second touch panel device 102.

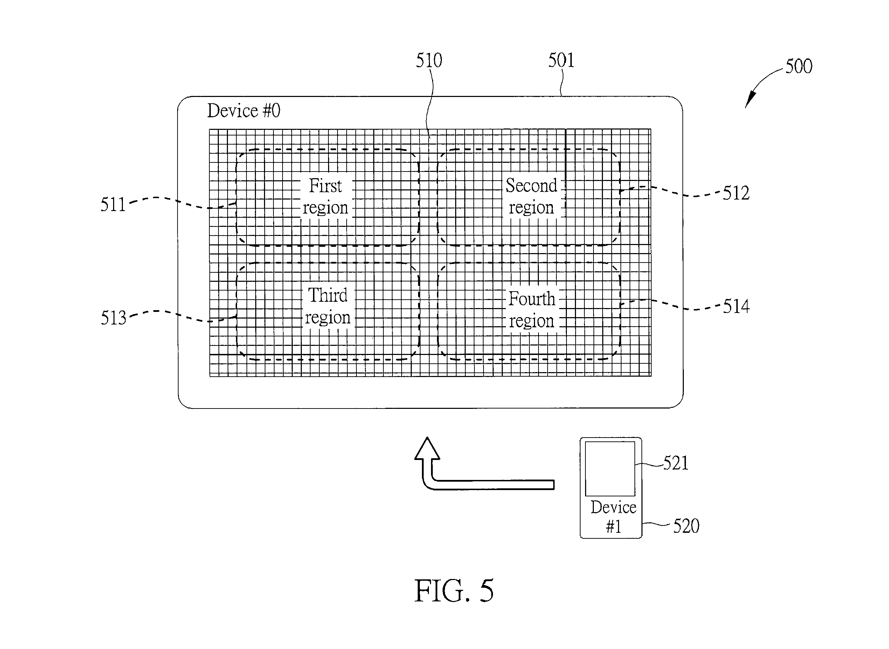

FIG. 5 illustrates a diagram of an apparatus for performing touch communications control of an electronic device according to an embodiment of the present invention, where some associated electronic devices are illustrated for better comprehension. At least a portion of the electronic device mentioned above may be, but not limited to, capable of performing touch communications. An electronic device capable of performing touch communications can be referred to as a touch communications device. A touch communications device may have a touch panel. The touch panel can be a touch panel that does not have the display functionality (e.g. a touch pad), or a touch panel that has the display functionality (e.g. a touch screen). As shown in FIG. 5, a touch communications system 500 may comprise multiple touch communications devices such as a touch communications device 501 and a first touch communications device 520 (respectively labeled "Device #0" and "Device #1" in FIG. 5, for better comprehension), and the apparatus may comprise at least one portion (e.g. a portion or all) of this touch communications system 500, which can be implemented by using the touch communications technologies mentioned above. For example, the apparatus may comprise a portion of this touch communications system 500, such as at least a portion of the touch communications device 501. In another example, the apparatus may comprise a portion of this touch communications system 500, such as at least a portion of the first touch communications device 520. In another example, the apparatus may comprise the whole of this touch communications system 500. This is for illustrative purposes only, and is not meant to be a limitation of the present invention. According to some variations of this embodiment, the apparatus may comprise at least one circuit of a specific touch communications device within the touch communications device 501 and the first touch communications device 520, such as at least one integrated circuit (IC) within one of the touch communications device 501 and the first touch communications device 520.

In one example, each of the touch communications device 501 and the first touch communications device 520 can be implemented by using the touch communications technologies mentioned above, and more particularly, can be a touch panel device that is capable of performing the operations of at least one of the first touch panel device 101 and the second touch panel device 102 mentioned above. In addition, each of the touch communications device 501 and the first touch communications device 520 can be equipped with a processor (not shown in FIG. 5) for performing touch communications control, where the processor may run some program codes to control the associated operations of touch communications control. The touch panel 510 of the touch communications device 501 may be arranged to allow a communications connection to be established through the touch panel 510. The processing circuit of the touch communications device 501 (e.g. the processor of the touch communications device 501 and/or the associated hardware circuits of the touch communications device 501) is capable of establishing a communications connection between the touch communications device 501 and the first touch communications device 520 and performing information transmission between the touch communications device 501 and the first touch communications device 520. The information transmission may include obtaining information from and/or sending information to the first touch communications device 520. The communications connection may be established through at least one of the touch panel 510 and the touch panel 521. The information transmission may be performed with aid of at least one of the touch panel 510 and the touch panel 521. The touch panel 521 of the first touch communications device 520 may be arranged to allow a communications connection to be established through the touch panel 521. The processing circuit of first touch communications device 520 (e.g. the processor of the first touch communications device 520 and/or the associated hardware circuits of the first touch communications device 520) is capable of establishing a communications connection between the touch communications device 501 and the first touch communications device 520 and performing information transmission between the touch communications device 501 and the first touch communications device 520. The information transmission may include obtaining information from and/or sending information to the touch communications device 501. The communications connection may be established through at least one of the touch panel 510 and the touch panel 521. The information transmission may be performed with aid of at least one of the touch panel 510 and the touch panel 521.

According to this embodiment, the touch communications device 501 is capable of performing location detection with aid of at least one of the touch panel 510 of the touch communications device 501 and the touch panel 521 of the first touch communications device 520. As shown in FIG. 5, the touch panel 510 of the touch communications device 501 (more particularly, a touch-sensitive display module of the touch communications device 501 in this embodiment, such as a touch screen) may display various kinds of information (e.g. text strings and/or graphics, for example), which can be regarded as a hint, to guide the user to place the first touch communications device 520 to be close to, or in contact with, at least one of a plurality of predetermined regions of the touch panel 510, such as at least one of the first region 511, the second region 512, the third region 513, and the fourth region 514 of the touch panel 510. In addition the touch panel 510 of the touch communications device 501 may display first guide information in the first region 511, and display second guide information in the second region 512, and may display third guide information in the third region 513, and further display fourth guide information in the fourth region 514. The operation of displaying information mentioned above may be performed under control of the processor of the touch communications device 501.

In this embodiment, the first guide information, the second guide information, the third guide information, and the fourth guide information can be used for notifying the user of which application of a plurality of applications will be triggered by placing the first touch communications device 520 to be in contact with (or to be close to) the corresponding region (e.g. one of the first region 511, the second region 512, the third region 513, and the fourth region 514). For example, the plurality of applications mentioned above may comprise an application A, an application B, an application C, and an application D. The applications may be the same as or different from each other. In a situation where the first region 511 is used for trigging the application A, the first guide information may comprise the name of the application A (e.g. the application name "A"), and therefore can be used for guiding the user to place the first touch communications device 520 to be close to, or in contact with, the first region 511 to trigger the application A. In addition, in a situation where the second region 512 is used for trigging the application B, the second guide information may comprise the name of the application B (e.g. the application name "B"), and therefore can be used for guiding the user to place the first touch communications device 520 to be close to, or in contact with, the second region 512 to trigger the application B. Additionally, in a situation where the third region 513 is used for trigging the application C, the third guide information may comprise the name of the application C (e.g. the application name "C"), and therefore can be used for guiding the user to place the first touch communications device 520 to be close to, or in contact with, the third region 513 to trigger the application C. Further, in a situation where the fourth region 514 is used for trigging the application D, the fourth guide information may comprise the name of the application D (e.g. the application name "D"), and therefore can be used for guiding the user to place the first touch communications device 520 to be close to, or in contact with, the fourth region 514 to trigger the application D. This is for illustrative purposes only, and is not meant to be a limitation of the present invention. According to some embodiments of the present invention, the guide information described above, such as the first guide information, the second guide information, the third guide information, and the fourth guide information, may vary. For example, the guide information may include associated information of an action (e.g. a photo and/or a graphic representation corresponding to the action) that the application may perform for the user, associated information of a service (e.g. a text string, a photo, and/or a graphic representation corresponding to the service) that the application may provide for the user, or any other information that may guide the user to place the first touch communications device 520 to be close to, or in contact with a region corresponding to the application that the user would like to utilize.

For example, the first service associated with the first region 511 can be an online shopping service and therefore the first guide information may comprise the text string "Online Shopping Service", the second service associated with the second region 512 can be an automatic (or automated) teller machine (ATM) service and therefore the second guide information may comprise the text string "ATM Service", the third service associated with the third region 513 can be a ticket service and therefore the third guide information may comprise the text string "Ticket Service", and the fourth service associated with the fourth region 514 can be a printing service and therefore the fourth guide information may comprise the text string "Printing Service", for example. This is for illustrative purposes only, and is not meant to be a limitation of the present invention.

According to some embodiments of the present invention, the application A, the application B, the application C, and the application D can be integrated into the same software module. This is for illustrative purposes only, and is not meant to be a limitation of the present invention.

As mentioned above, the touch panel 510 of the touch communications device 501 may display the first guide information in the first region 511, and display the second guide information in the second region 512, and may display the third guide information in the third region 513, and further display the fourth guide information in the fourth region 514. This is for illustrative purposes only, and is not meant to be a limitation of the present invention. According to some embodiments of the present invention, it is unnecessary to display the first guide information, the second guide information, the third guide information, and the fourth guide information. For example, the user may have known which region of the first region 511, the second region 512, the third region 513, and the fourth region 514 is the correct region for the user to place his/her own touch communications device (e.g. the first touch communications device 520) to be close to, or in contact with, this region to trigger the target application (e.g. one of the application A, the application B, the application C, and the application D). Thus, in a situation where the processor of the touch communications device 501 prevents the touch panel 510 of the touch communications device 501 from displaying the first guide information, the second guide information, and the third guide information, and the fourth guide information, the security of the touch communications system 500 may be enhanced.

Please note that the first touch communications device 520 may send a first device identification signal to the touch communications device 501, to allow the touch communications device 501 to identify (or recognize) the first touch communications device 520. For example, according to an embodiment of the present invention, the first device identification signal can be received by at least one of the first region 511, the second region 512, the third region 513, and the fourth region 514 of the touch panel 510. This is for illustrative purposes only, and is not meant to be a limitation of the present invention. According to some embodiments of the present invention, the first device identification signal can be received by any other region of the touch panel 510, such as at least one other region (e.g. one or more other regions) of the touch panel 510. For example, the device identification signal can be a signal carrying identification information that can be used for identifying the corresponding touch communications device such as the first touch communications device 520, where examples of the identification information may include, but not limited to, the user name, the International Mobile Equipment Identity (IMEI) number, certification information, authorization information, etc.

According to some embodiments of the present invention, in a situation where the first touch communications device 520 is close to, or in contact with, at least one of the first region 511, the second region 512, the third region 513 and the fourth region 514, when this situation has not been changed for a predetermined time period, the aforementioned processor of the touch communications device 501 can start running the target application associated with the corresponding region. Examples of the application mentioned above may include, but not limited to, encryption document browsing applications, common account management applications, audio playback applications, video playback applications, remote control applications, etc., which may depend on various kinds of default settings and/or user settings, and may depend on various kinds of market requirements.

According to some embodiments of the present invention, the predetermined time period mentioned above can be set as two seconds, for example. In the situation described above (e.g. the situation where the first touch communications device 520 is close to, or in contact with, at least one of the first region 511, the second region 512, the third region 513 and the fourth region 514), within two seconds, if the first touch communications device 520 is removed from the touch communications device 501, the aforementioned processor of the touch communications device 501 may determine that the condition for running the target application (e.g. the associated application that is supposedly to be run in the aforementioned situation) is not satisfied. Thus, the first touch communications device 520 should be close to, or in contact with, the same region (e.g. the corresponding region within the first region 511, the second region 512, the third region 513, and the fourth region 514, for the predetermined time period such as two seconds again to make the condition for running the aforementioned target application (e.g. the associated application mentioned above) be satisfied, so the processor of the touch communications device 501 may run the target application (e.g. the associated application mentioned above). This is for illustrative purposes only, and is not meant to be a limitation of the present invention.

As mentioned above, the predetermined time period can be set as two seconds, for example. This is for illustrative purposes only, and is not meant to be a limitation of the present invention. According to some embodiments of the present invention, the predetermined time period mentioned above can be set to be equivalent to another fixed value of time.

Please note that the electrode grid illustrated within the touch panel 510 of the touch communications device 501 shown in FIG. 5 may cover a portion or the whole region of the touch panel 510. According to some embodiments, when the first touch communications device 520 is placed to be close to, or in contact with, the touch panel 510, a processing circuit of the touch communications device 501 (e.g. the processor of the touch communications device 501 and/or the associated hardware circuits of the touch communications device 501) may utilize the electrode grid of the touch panel 510 to detect the change of the electromagnetic field, and therefore may detect that the first touch communications device 520 is placed to be close to, or in contact with, the touch panel 510. This is for illustrative purposes only, and is not meant to be a limitation of the present invention. According to some embodiments, the first touch communications device 520 may utilize the electrode grid of the touch panel 521 thereof to detect the change of the electromagnetic field, and therefore may detect that the first touch communications device 520 is placed to be close to, or in contact with, the touch panel 510, and may further send a signal to the touch communications device 501, for asking the touch communications device 501 to run an application.

According to some embodiments, the first touch communications device 520 may utilize the electrode grid of the touch panel 521 thereof to detect the change of the electromagnetic field through the touch panel 521 of the first touch communications device 520, and therefore may detect that the first touch communications device 520 is placed to be close to, or in contact with, the touch panel 510, and may further send a signal to the touch communications device 501, for notifying the touch communications device 501 that the first touch communications device 520 is placed to be close to, or in contact with, the touch panel 510, to cause the touch communications device 501 to run an application.

According to some embodiments, when the first touch communications device 520 is placed to be close to, or in contact with, the touch panel 510, the processing circuit of the touch communications device 501 may utilize the electrode grid of the touch panel 510 to detect the change of the electromagnetic field, and therefore may detect that the first touch communications device 520 is placed to be close to, or in contact with, the touch panel 510. In addition, the first touch communications device 520 may utilize the electrode grid of the touch panel 521 thereof to detect the change of the electromagnetic field, and therefore may detect that the first touch communications device 520 is placed to be close to, or in contact with, the touch panel 510. For example, in a situation where the first touch communications device 520 is placed to be close to, or in contact with, the touch panel 510, the touch communications device 501 may notify the first touch communications device 520 of this situation (e.g. through the touch panel 510 and the touch panel 521). In another example, the first touch communications device 520 may notify the touch communications device 501 of this situation (e.g. through the touch panel 521 and the touch panel 510). In some examples, any touch communications device within the touch communications device 501 and the first touch communications device 520 may notify the other touch communications device within the touch communications device 501 and the first touch communications device 520 of this situation.

Please note that the area of the touch panel 520 and the touch panel 521 and the size of the touch communications device 501 and the first touch communications device 520 are for illustrative purposes only, and are not meant to be a limitation of the present invention. The area of touch panel and the size of the touch communications device can vary upon different design requirements.

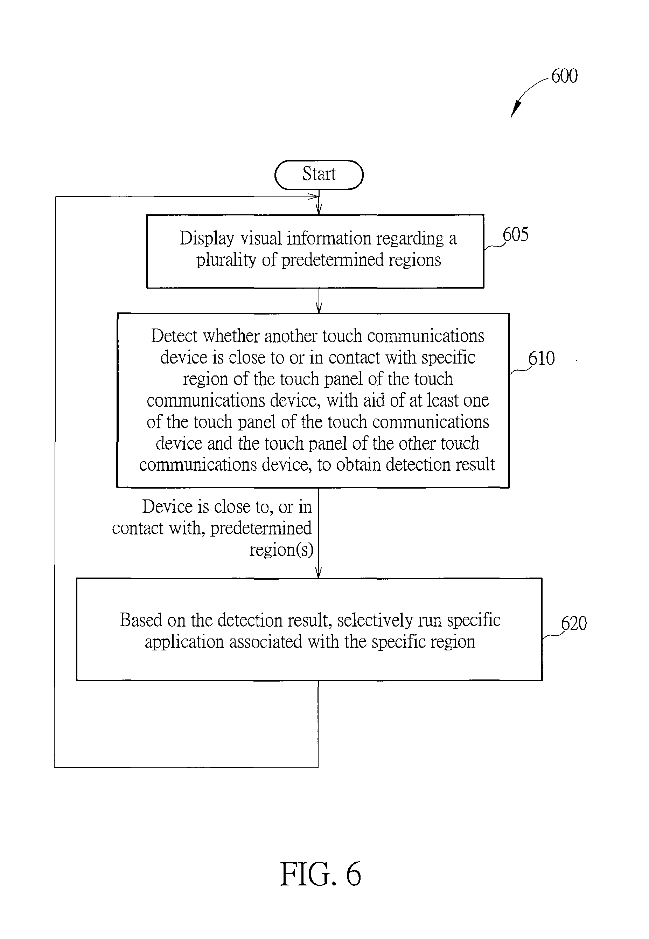

FIG. 6 illustrates a flowchart of method 600 for performing touch communications control of an electronic device such as that mentioned above according to an embodiment of the present invention. The method 600 can be applied to the aforementioned apparatus for performing touch communications control (e.g. the apparatus which may comprise at least one portion of the touch communications device). In this embodiment, the method 600 can be applied to the touch communications device 501 and the processing circuit thereof (e.g. the processor of the touch communications device 501 and/or the associated hardware circuits of the touch communications device 501). The method 600 can be described as follows.

In Step 605, the touch panel 510 of the touch communications device 501 (more particularly, the aforementioned touch-sensitive display module of the embodiment shown in FIG. 5, such as the touch screen mentioned above) may display visual information regarding at least one of a plurality of predetermined regions such as that mentioned above (e.g. the first region 511, the second region 512, the third region 513, and the fourth region 514 shown in FIG. 5). For example, the touch panel 510 of the touch communications device 501 may display the boundaries of the plurality of predetermined regions (e.g. the boundaries of the first region 511, the second region 512, the third region 513, and the fourth region 514 shown in FIG. 5), respectively. In another example, the touch panel 510 of the touch communications device 501 may display the aforementioned guide information respectively corresponding to the plurality of predetermined regions, and more particularly, may display the first guide information in the first region 511, and display the second guide information in the second region 512, and may display the third guide information in the third region 513, and further display the fourth guide information in the fourth region 514. The operation of displaying information mentioned above may be performed under control of the processor of the touch communications device 501 (e.g. the processor running the program codes mentioned above). In some embodiments, Step 605 may be omitted.

In Step 610, the processing circuit of the touch communications device 501 is capable of detecting whether another touch communications device (e.g. the first touch communications device 520 mentioned above) is close to or in contact with a specific region of the touch panel 510 of the touch communications device 501, such as the first region 511, with aid of at least one of the touch panel 510 of the touch communications device 501 and the touch panel of the other touch communications device, to obtain a detection result. Please note that the first region 511 can be taken as an example of the specific region. This is for illustrative purposes only, and is not meant to be a limitation of the present invention. Another region of the touch panel 510, such as any of the second region 512, the third region 513, and the fourth region 514 can be taken as an example of the specific region. As the processing circuit of the touch communications device 501 is capable of detecting whether the other touch communications device is close to or in contact with the specific region, the processing circuit of the touch communications device 501 may perform location detection on the other touch communications device (e.g. the first touch communications device 520 mentioned above), with aid of at least one of the touch panel 510 and the touch panel of the other touch communications device (e.g. the touch panel 521 of the first touch communications device 520).

In Step 620, based on the detection result, the processing circuit of the touch communications device 501 may selectively run a specific application associated with the specific region. In one embodiment, when it is detected that the touch panel of the other touch communications device (e.g. the touch panel 521 of the first touch communications device 520) is placed to be close to, or in contact with, the specific region, the processing circuit of the touch communications device 501 may run the specific application associated with the specific region, based on the detection result. For example, in a situation where the first region 511 is taken as an example of the specific region, the processing circuit of the touch communications device 501 may run a first application associated with the first region 511 based on the detection result. In one embodiment, when the touch panel of the other touch communications device is placed to be close to, or in contact with, the first region 511 of the touch panel 510, the touch communications device 501 may be triggered, by the other touch communications device, to run the first application. This is for illustrative purposes only, and is not meant to be a limitation of the present invention. Another region of the touch panel 510, such as any of the second region 512, the third region 513, and the fourth region 514 can be taken as an example of the specific region. For example, in a situation where the second region 512 is taken as an example of the specific region, the processing circuit of the touch communications device 501 may run a second application associated with the second region 512 based on the detection result. In one embodiment, when the touch panel of the other touch communications device is placed to be close to, or in contact with, the second region 512 of the touch panel 510, the touch communications device 501 may be triggered, by the other touch communications device, to run the second application. The second application may be an application that is the same as or different from the first application.

As mentioned above, the processing circuit of the touch communications device 501 is capable of detecting whether the other touch communications device is close to or in contact with the specific region. This is for illustrative purposes only, and is not meant to be a limitation of the present invention. For example, when the touch panel of the other touch communications device is placed to be close to, or in contact with, the first region 511 and the second region 512 of the touch panel 510 at the same time, the touch communications device 501 may be triggered, by the other touch communications device (e.g. the first touch communications device 520), to run a third application, both the first and the second applications, or all of the first, the second and the third applications. Thus, when it is detected that the touch panel of the other touch communications device (e.g. the touch panel 521 of the first touch communications device 520) is placed to be close to, or in contact with, at least one predetermined region (e.g. one or more predetermined regions) of the plurality of predetermined regions of the touch panel 510, the touch communications device 501 may be triggered, by the other touch communications device, to run at least one predetermined application (e.g. one or more predetermined applications) of a plurality of predetermined applications, where the aforementioned at least one predetermined application is associated with the aforementioned at least one predetermined region, and one or more applications within the first application, the second application, and the third application mentioned above can be taken as an example of the aforementioned at least one predetermined application.

Please note that, for example, by applying the method 600 to the aforementioned apparatus for performing touch communications control, and more particularly, to at least a portion of the touch communications device 501 and the processing circuit thereof (e.g. the processor of the touch communications device 501 and/or the associated hardware circuits of the touch communications device 501), the touch communications device 501 may be equipped with the associated functionalities in one or more of the above embodiments. For brevity, similar descriptions for this embodiment are not repeated in detail here.

In one example, the processing circuit may establish a communications connection between the touch communications device 501 and the other touch communications device (e.g. the first touch communications device 520), where the processing circuit may obtain identification information of the other touch communications device to determine whether the other touch communications device is one of a plurality of predetermined touch communications devices. For example, the processing circuit may selectively enable at least one portion (e.g. a portion or all) of operations of the aforementioned at least one predetermined application (e.g. the first application), according to whether the other touch communications device (e.g. the first touch communications device 520) is one of the plurality of predetermined touch communications devices. When it is detected that the other touch communications device (e.g. the first touch communications device 520) is one of the plurality of predetermined touch communications devices, the processing circuit may enable the aforementioned at least one portion (e.g. a portion or all) of operations of the aforementioned at least one predetermined application (e.g. the first application). This is for illustrative purposes only, and is not meant to be a limitation of the present invention.

According to some embodiments, the communications connection mentioned above can be established through at least one of the touch panel 510 of the touch communications device 501 and the touch panel of the other touch communications device (e.g. the touch panel 521 of the first touch communications device 520). In one embodiment, the communications connection can be established through both of the touch panel 510 and the touch panel of the other touch communications device. In one embodiment, the communications connection can be established through both of the region of the touch panel 510 that the other touch communications device is close to or in contact with and the touch panel of the other touch communications device.

According to some embodiments, the aforementioned at least one predetermined region can be a single predetermined region within the plurality of predetermined regions (e.g. any region of the first region 511, the second region 512, the third region 513, and the fourth region 514 shown in FIG. 5). In addition, the aforementioned at least one predetermined application can be a single predetermined application of the plurality of predetermined applications. This is for illustrative purposes only, and is not meant to be a limitation of the present invention.

According to some embodiments, the aforementioned at least one predetermined region may comprise multiple predetermined regions within the plurality of predetermined regions (e.g. two or more regions of the first region 511, the second region 512, the third region 513, and the fourth region 514 shown in FIG. 5), where the aforementioned at least one predetermined application may comprise multiple predetermined applications within the plurality of predetermined applications. In one embodiment, when it is detect that the touch panel of the other touch communications device (e.g. the touch panel 521 of the first touch communications device 520) is placed to be close to, or in contact with, the multiple predetermined regions of the touch panel 510 of the touch communications device 501 (e.g. the aforementioned two or more regions of the first region 511, the second region 512, the third region 513, and the fourth region 514 shown in FIG. 5) at the same time, the touch communications device 501 may be triggered, by the other touch communications device (e.g. the first touch communications device 520), to run the multiple predetermined applications. This is for illustrative purposes only, and is not meant to be a limitation of the present invention.

According to some embodiments, the aforementioned at least one predetermined region comprises multiple predetermined regions within the plurality of predetermined regions (e.g. two or more regions of the first region 511, the second region 512, the third region 513, and the fourth region 514 shown in FIG. 5), where the aforementioned at least one predetermined application is a single predetermined application of the plurality of predetermined applications. In one embodiment, when it is detect that the touch panel of the other touch communications device (e.g. the touch panel 521 of the first touch communications device 520) is placed to be close to, or in contact with, the multiple predetermined regions of the touch panel 510 of the touch communications device 501 (e.g. the aforementioned two or more regions of the first region 511, the second region 512, the third region 513, and the fourth region 514 shown in FIG. 5) at the same time, the touch communications device 501 may be triggered, by the other touch communications device (e.g. the first touch communications device 520), to run the single predetermined applications. This is for illustrative purposes only, and is not meant to be a limitation of the present invention.

According to some embodiments, in a situation where the touch panel 510 of the touch communications device 501 comprises the second region 512 and the first application is further associated with the second region 512, the processing circuit of the touch communications device 501 may detect whether the other touch communications device is close to or in contact with at least one region of the first region 511 and the second region 512 of the touch panel 510 of the touch communications device 501, running the first application associated based on the detection result.

According to some embodiments, the touch communications device 501 and the first touch communications device 520 may establish a communications connection between the touch communications device 501 and the first touch communications device 520, and may perform information transmission between the touch communications device and the other touch communications device. In one embodiment, in a situation where the first touch communications device 520 is placed to be close to, or in contact with, the touch panel 510, at least one touch communications device within the touch communications device 501 and the first touch communications device 520 may notify the other touch communications device within the touch communications device 501 and the first touch communications device 520 of this situation. For example, the touch communications device 501 may obtain notification information from the first touch communications device 520, where this notification information is generated by the first touch communications device 520, and this notification information is utilized for notifying (e.g. through the touch panel 510 and the touch panel 521) the touch communications device 501 that the first touch communications device 520 is close to or in contact with at least one predetermined region of the touch panel 510. This is for illustrative purposes only, and is not meant to be a limitation of the present invention. In another example, the touch communications device 501 may send notification information to the first touch communications device 520, where this notification information is generated by the touch communications device 501, and this notification information is utilized for notifying (e.g. through the touch panel 521 and the touch panel 510) the first touch communications device 520 that the first touch communications device 520 is close to or in contact with at least one predetermined region of the touch panel 510. In some examples, the touch communications device 501 may obtain notification information from the first touch communications device 520, such as the aforementioned notification information that is obtained from the first touch communications device 520 by the touch communications device 501, and the touch communications device 501 may send other notification information to the first touch communications device 520, such as the aforementioned notification information that is sent to the first touch communications device 520 by the touch communications device 501.

According to some embodiments, an apparatus for performing touch communications control is provided, where this apparatus may comprise at least one portion (e.g. a portion or all) of the first touch communications device 520. For example, this apparatus may comprise the touch panel 521 of the first touch communications device 520, and may further comprise a processing circuit of the first touch communications device 520 (e.g. the processor of the first touch communications device 520 and/or the associated hardware circuits of the first touch communications device 520), where this processing circuit of the first touch communications device 520 may be coupled to the touch panel 521. The touch panel 521 may be arranged to detect touch input of a user (e.g. the user of the first touch communications device 520 and/or the touch communications device 501) and allow a communications connection to be established through the touch panel 521, and the processing circuit of the first touch communications device 520 may be arranged to perform touch communications control. In one embodiment, when the first touch communications device 520 is close to, or in contact with, the first region 511 of the touch panel 510 of the touch communications device 501, the first touch communications device 520 may trigger the touch communications device 501 to run the first application associated with the first region 511, with aid of at least one of the touch panel 521 and the touch panel 510. For example, the processing circuit of the first touch communications device 520 may detect whether the first touch communications device 520 is close to or in contact with the first region 511 of the touch panel 510 of the touch communications device 501.

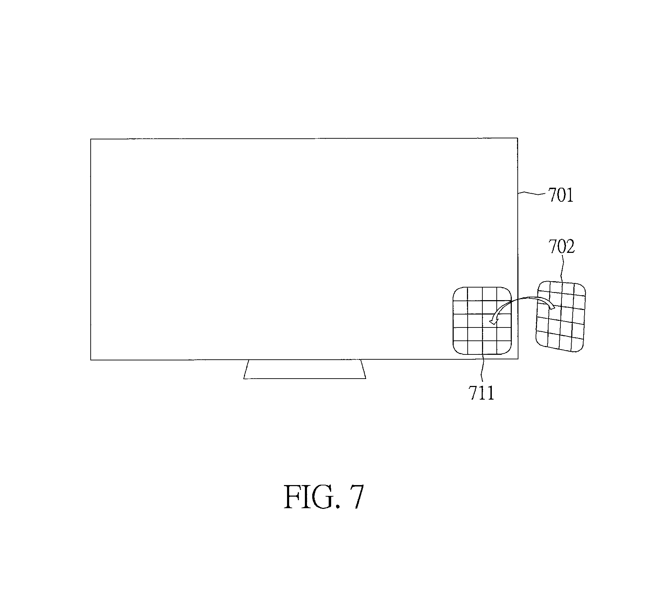

FIG. 7 illustrates an electronic device 701 according to an embodiment of the present invention. For example, one of the two touch communications devices shown in FIG. 5, such as the touch communications device 501, can be integrated into the electronic device 701, and therefore can be referred to the touch communications device 711 within the electronic device 701 in this embodiment. In addition, the other one of the two touch communications devices shown in FIG. 5, such as the first touch communications device 520, can be referred to the touch communications device 702 in this embodiment. Additionally, the touch communications device 702 may interact with the electronic device 701 through the touch communications device 711 that is integrated into the electronic device 701.

As shown in FIG. 7, only a portion of the display area on the display module (e.g. a liquid crystal display (LCD) module, or LCM) of the electronic device 701 is covered with the electrodes of the touch panel within the touch communications device 711. As a result, the related costs can be saved since the area of this touch panel is smaller than the display area on this display module. In a situation where the touch communications device 711 is integrated into the electronic device 701, the touch communications device 711 and the touch communications device 702 may still establish a communications connection between the touch panel of the touch communications device 711 and the touch panel of the touch communications device 702, and transmit or receive data, where the touch communications device 711 may be equipped with the associated functionalities in one or more of the above embodiments. According to this embodiment, the electronic device 701 can be a monitor. This is for illustrative purposes only, and is not meant to be a limitation of the present invention. According to some variations of this embodiment, the electronic device 701 shown in FIG. 7 can be any other device. For example, the electronic device 701 can be a television (TV). In another example, the electronic device 701 can be a refrigerator. In another example, the electronic device 701 can be a kiosk machine.

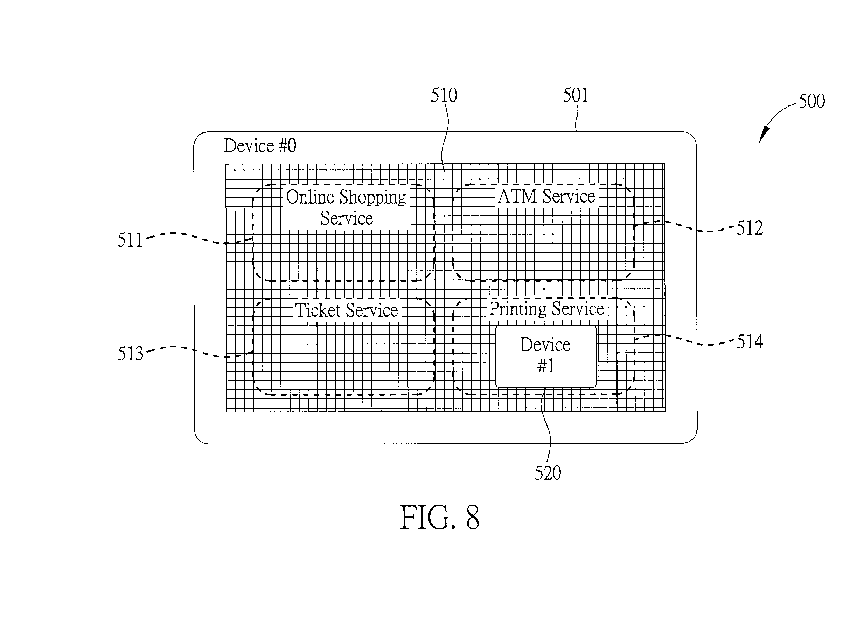

FIG. 8 illustrates a control scheme involved with the method 600 shown in FIG. 6 according to an embodiment of the present invention. For example, the touch communications device 501 can be a kiosk machine, and the first touch communications device 520 can be a mobile phone. According to this embodiment, the first service can be an online shopping service such as that mentioned above, and therefore the first guide information may comprise the text string "Online Shopping Service" shown around the upper left of FIG. 8. In addition, the second service can be an ATM service such as that mentioned above, and therefore the second guide information may comprise the text string "ATM Service" shown around the upper right of FIG. 8. Additionally, the third service can be a ticket service such as that mentioned above, and therefore the third guide information may comprise the text string "Ticket Service" shown around the lower left of FIG. 8. Further, the fourth service can be a printing service such as that mentioned above, and therefore the fourth guide information may comprise the text string "Printing Service" shown around the lower right of FIG. 8.

In one example, the processing circuit of the touch communications device 501 may establish a communications connection such as that mentioned above, so the touch communications device 501 and the first touch communications device 520 may interact with each other, and may exchange service information for facilitating one or more services provided by the touch communications device 501, such as the online shopping service, the ATM service, the ticket service, and the printing service. For example, when the first touch communications device 520 is close to or in contact with the first region 511, the first touch communications device 520 may transmit the account of the user, the password of the user, the consignee information, etc. to the touch communications device 501, so the user may login or utilize the online shopping service with ease, and the user can save his/her time during the whole shopping progress. In another example, when the first touch communications device 520 is close to or in contact with the first region 511, the touch communications device 501 may transmit seasonal discount messages or seasonal coupons to the first touch communications device 520, in order to achieve the goal of advertisement. In addition, when the first touch communications device 520 is close to or in contact with the second region 512, the first touch communications device 520 may transmit the password of the user, the transferee account, the transaction amount, etc. to the touch communications device 501, so the user may complete the transaction with ease. Additionally, when the first touch communications device 520 is close to or in contact with the third region 513, the first touch communications device 520 may transmit the account of the user, the password of the user, etc. to the touch communications device 501, and the touch communications device 501 may transmit an electronic file (or a Quick Response (QR) code) of the ticket to the first touch communications device 520 after the touch communications device 501 obtains information regarding the order of the user, so the user may use the ticket. Further, when the first touch communications device 520 is close to or in contact with the fourth region 514, the first touch communications device 520 may transmit data for being printed, such as the information of something to be printed, to the touch communications device 501, and the touch communications device 501 may print a hard copy correspondingly. For brevity, similar descriptions for this embodiment are not repeated in detail here. Besides, please note that the touch panel mentioned above can be a touch panel that does not have the display functionality (e.g. a touch pad), or a touch panel that has the display functionality (e.g. a touch screen).

All combinations and sub-combinations of above-described features also belong to the invention.

## Claims

1. A method for performing touch communications control, the method being applied to a touch communications device (501), **characterized in that** the method comprises the steps of:
detecting whether another touch communications device (520) is close to or in contact with a first region (511) of a touch panel (510) of the touch communications device (501) with aid of at least one of the touch panel (510) of the touch communications device (501) and a touch panel (521) of the other touch communications device (520) to obtain a detection result; and
running a first application associated with the first region (511) based on the detection result.

2. The method of claim 1, **characterized in that** the method further comprises:
detecting whether the other touch communications device (520) is close to or in contact with a second region (512) of the touch panel (510) of the touch communications device (501) with aid of at least one of the touch panel (510) of the touch communications device (501) and the touch panel (521) of the other touch communications device (520) to obtain another detection result; and
running a second application associated with the second region (512) based on the other detection result.

3. The method of claim 2, **characterized in that** the first application and the second application are the same application.

4. The method of claim 2, **characterized in that** when the touch panel (521) of the other touch communications device (520) is placed to be close to, or in contact with, the first region (511) and the second region (512) of the touch panel (510) of the touch communications device (501) at a same time, the touch communications device (501) is triggered, by the other touch communications device (520), to run a third application.

5. The method of claim 1, **characterized in that** the method further comprises:
establishing a communications connection between the touch communications device (501) and the other touch communications device (520); and
performing information transmission between the touch communications device (501) and the other touch communications device (520).

6. The method of claim 5, **characterized in that** the step of performing information transmission between the touch communications device (501) and the other touch communications device (520) further comprises:
obtaining information from the other touch communications device (520), wherein the information is generated by the other touch communications device (520).

7. The method of claim 5, **characterized in that** the step of performing information transmission between the touch communications device (501) and the other touch communications device (520) further comprises:
sending information to the other touch communications device (520), wherein the information is generated by the touch communications device (501).

8. The method of claim 5, **characterized in that** the step of performing information transmission between the touch communications device (501) and the other touch communications device (520) further comprises:
obtaining identification information of the other touch communications device (520) to determine whether the other touch communications device (520) is one of a plurality of predetermined touch communications devices.

9. The method of claim 5, **characterized in that** the information is for facilitating a service provided by the touch communications device (501).

10. The method of claim 5, **characterized in that** the communications connection is established through both of the touch panel (510) of the touch communications device (501) and the touch panel (521) of the other touch communications device (520).

11. The method of claim 2, **characterized in that** when the touch panel (521) of the other touch communications device (520) is placed to be close to, or in contact with, the first region (511) and the second region (512) of the touch panel (510) of the touch communications device (501) at the same time, the touch communications device (501) is triggered, by the other touch communications device (520), to run the first application and the second application.

12. An apparatus (501) for performing touch communications control according to claims 1-11, wherein the apparatus (501) comprises at least one portion of the touch communications device (501).

13. An apparatus (520) for performing touch communications control according to claims 1-11, wherein the apparatus (520) comprises at least one portion of the other touch communications device (520), wherein based on whether the other touch communications device (520) is close to or in contact with the first region (511) of the touch panel (510) of the touch communications device (501), the other touch communications device (520) is capable of triggering the touch communications device (501) to run the first application associated with the first region (511).

14. An electronic device (701) comprising an apparatus (711) for performing touch communications control according to claims 1-11, wherein the apparatus (711) comprises at least one portion of the touch communications device (501).
